# EUROPEAN PATENT SPECIFICATION

(11) **EP 1 967 538 B1**
(45) Date of publication and mention of the grant of the patent: **21.03.2018**
(21) Application number: 06843178.2
(22) Date of filing: 25.12.2006
(51) Int. Cl.: C08G 18/50, C08G 101/00

(54) **POLYOL COMPOSITION AND LOW-REPULSION POLYURETHANE FOAM**
POLYOLZUSAMMENSETZUNG UND POLYURETHANSCHAUMSTOFF MIT GERINGER REPULSION
COMPOSITION DE POLYOL ET MOUSSE DE POLYURETHANE A FAIBLE REPULSION

(30) Priority: 28.12.2005 JP 2005379694
(43) Date of publication of application: 10.09.2008
(73) Proprietor: Mitsui Chemicals, Inc., Tokyo (JP)
(72) Inventor: KAGEOKA, Masakazu, Sodegaura-shi, Chiba 2990265 (JP); MORIYA, Toshiaki, Sodegaura-shi, Chiba 2990265 (JP); INAOKA, Katsumi, Sodegaura-shi, Chiba 2990265 (JP)
(74) Representative: Hoffmann Eitle
(86) International application number: PCT/JP2006/325775
(87) International publication number: WO 2007/077792

(56) References cited:
- EP-A1- 0 934 962
- EP-A1- 1 688 449
- WO-A1-03/054047
- JP-A- 09 302 066
- JP-A- 11 286 566
- JP-A- 2004 231 899
- JP-A- 2006 063 254

## Description

### Field of the Invention

The present invention relates to a low resilience polyurethane foam used as a low resilient elastic material, and a polyol composition formulated as a raw material of the low resilience polyurethane foam.

### Description of Related Art

Conventionally, low resilience polyurethane foams have been used as a low resilient elastic material required to have low resilience, such as impact energy absorbing material, sound insulating material, vibration damping material, cushioning material, and mattress material.

In this type of low resilience urethane foam, components of the urethane foam, namely, type of polyisocyanate and functionality and hydroxyl value of polyol, are selected and formulated such that glass transition can be caused at room temperature, so that low resilience can be imparted to the urethane foam by the glass transition phenomenon.

In recent years, there has been proposed a low resilience polyurethane foam which is formulated such that glass transition is caused at low temperature of 0°C or less as well as at room temperature, has excellent low resilience at room temperature and shows less increase in hardness even at lower temperature (cf. Patent Document 1, for example).
Patent Document 1: Japanese Unexamined Patent Publication No. 11-286566 (corresponding to EP 0934962 A1)

The prior right EP 1688449 relates to flexible polyurethane foam inhibited from discoloring, which is produced by foaming a polyurethane composition containing a polyol component and an isocyanate component. The polyol component contains two or more polyols with different molecular weights and the difference in molecular weight between one of the polyols that has the highest molecular weight and another one of the polyols that has the lowest molecular weight is 500 or more.

JP 09-302066 A seeks to provide a flexible molded foam which has a low resilience, a low temperature dependence of hardness, and a low compression set by reacting a specific polyol component with a polyisocyanate in the presence of a blowing agent. The polyol component has a hydroxyl value of 34-130mgKOH/g and comprises 50-80wt.% polyol having an average functionality of 2-5 and a hydroxyl value of 20-60mgKOH/g and 20-50wt.% polyol having an average functionality of 1.5-4.5 and a hydroxyl value of 90mgKOH/g or higher but lower than 200mgKOH/g, and is reacted with a polyisocyanate in the presence of a blowing agent.

### DISCLOSURE OF THE INVENTION

### Problems to be Solved

The low resilience polyurethane foam described in Patent Document 1 can acquire excellent low resilience and flexibility at low temperature. However, when exposed under ambient atmosphere, particularly under ambient atmosphere containing NOₓ, the low resilience polyurethane foam may be discolored to yellow (yellowing), leading to a decrease in its commercial value.

In addition to the low resilience, improvement in mechanical strength of polyurethane foam, such as tensile strength, is recently demanded.

An object of the present invention is to provide a low resilience polyurethane foam having good low resilience at room temperature and excellent in yellowing resistance and mechanical strength, and a polyol composition formulated as a raw material of the low resilience polyurethane foam.

The polyol composition of the present invention contains polyol (a-1) in an amount of from 20 to 80% by weight, having an average functionality of from 1.5 to 4.5 and a hydroxyl value of from 20 to 70 mgKOH/g, and polyol (a-2) in an amount of from 20 to 80% by weight, having an average functionality of from 1.5 to 4.5 and a hydroxyl value of from 100 to 300 mgKOH/g, and containing at least amine as an initiator.

In the polyol composition of the present invention, it is preferable that the polyol (a-1) is from 20 to 40 % by weight, and the polyol (a-2) is from 60 to 80 % by weight.

It is preferable that the polyol (a-2) contains amine and alcohol, as an initiator.

Further, it is preferable that the amine and the alcohol are aliphatic compounds.

The low resilience polyurethane foam of the present invention is obtainable by allowing a polyurethane foam composition containing the polyol composition described above, hereinafter referred to as polyol (a), polyisocyanate (b), catalyst (c), and blowing agent (d) to react, having an impact resilience measured in accordance with JIS K 6400 (1997) of 10% or less, and a difference of b* value in the L*a*b* color difference (CIE1976) before and after exposure to air containing 400 ppm of NO₂ gas for 1 hour of 20 or less.

It is preferable that the low resilience polyurethane foam has a hardness (25%CLD) measured in accordance with JIS K 6400 (1997) of 10 N/100 cm² or less.

Further, it is preferable that the low resilience polyurethane foam has a tensile strength measured in accordance with JIS K 6400 (1997) of 0.4 x 9.8 x 10⁴ Pa or more.

The low resilience polyurethane foam of the present invention is obtainable by allowing a polyurethane foam composition containing polyol (a), polyisocyanate (b), catalyst (c), and blowing agent (d) to react, the polyol (a) containing polyol (a-1) in an amount of from 20 to 80% by weight, having an average functionality of from 1.5 to 4.5 and a hydroxyl value of from 20 to 70 mgKOH/g, and polyol (a-2) in an amount of from 20 to 80% by weight, having an average functionality of from 1.5 to 4.5 and a hydroxyl value of from 100 to 300 mgKOH/g, and containing at least amine as an initiator, having an impact resilience measured in accordance with JIS K 6400 (1997) of 10% or less, and a difference of b* value in the L*a*b* color difference (CIE1976) before and after exposure to air containing 400 ppm of NO₂ gas for 1 hour of 20 or less.

### EFFECT OF THE INVENTION

A low resilience polyurethane foam obtainable by using the polyol composition of the present invention, and the low resilience polyurethane foam of the present invention have good low resilience at room temperature, and are excellent in yellowing resistance and mechanical strength. Therefore, the low resilience polyurethane foam can be effectively used as impact energy absorbing material, sound insulating material, vibration damping material, and cushioning material for chairs and mattresses.

### DETAILED DESCRIPTION OF PREFERRED EMBODIMENTS

The polyol composition of the present invention contains polyol (a-1) in an amount of from 20 to 80% by weight, having an average functionality of from 1.5 to 4.5 and a hydroxyl value of from 20 to 70 mgKOH/g, and polyol (a-2) in an amount of from 20 to 80% by weight, having an average functionality of from 1.5 to 4.5 and a hydroxyl value of from 100 to 300 mgKOH/g, and containing at least amine as an initiator.

Examples of these polyol (a-1) and polyol (a-2) include polyoxyalkylene polyol.

Examples of the polyoxyalkylene polyol include those in which alkylene oxide is added to an initiator such as water, alcohol, amine, and ammonia.

Examples of the alcohols that may be used as the initiator includes monohydric or polyhydric aliphatic alcohols including monohydric aliphatic alcohol such as methanol and ethanol; dihydric aliphatic alcohols such as ethylene glycol and propylene glycol; trihydric aliphatic alcohols such as glycerine and trimethylolpropane; tetrahydric aliphatic alcohols such as pentaerythritol; hexahydric aliphatic alcohol such as sorbitol; and octahydric aliphatic alcohols such as sucrose.

Examples of the amines that may be used as the initiator include monofunctional or polyfunctional aliphatic amines including monofunctional aliphatic amines such as dimethylamine and diethylamine; difunctional aliphatic amines such as methylamine and ethylamine; trifunctional aliphatic amines such as monoethanolamine, diethanolamine, and triethanolamine; tetrafunctional aliphatic amines such as ethylenediamine; and pentafunctional aliphatic amines such as diethylenetriamine.

Of these initiators, for the polyol (a-1), monohydric or polyhydric aliphatic alcohols are preferably used, or monohydric to hexahydric aliphatic alcohols are more preferably used. Also, for the polyol (a-2), monofunctional or polyfunctional aliphatic amines are used, or monofunctional to pentafunctional aliphatic amines are preferably used.

Further, as for the polyol (a-2), monofunctional to pentafunctional aliphatic amines and monohydric to pentahydric aliphatic alcohols are more preferably used in combination. When an aliphatic amine and an aliphatic alcohol are used in combination, the aliphatic amine and the aliphatic alcohol are blended in such a proportion by weight of the polyol that the polyol using the aliphatic amine as the initiator is in an amount of, for example, from 5 to 25 parts by weight, or preferably from 10 to 18 parts by weight, per 100 parts by weight of the polyol using the aliphatic alcohol as the initiator.

In the present invention, the amine and the alcohol are preferably aliphatic compound as described above. If the amine and the alcohol are aromatic compound, coloring of polyurethane foam may be disadvantageously promoted, and scorch (burn) resistance may be severely reduced during foaming of the polyurethane foam. For example, in a slabstock foam process, the inner portion of the polyurethane foam may be discolored due to scorching (burn), resulting in a decrease in its commercial value.

Although the initiator can be used alone or in combination, the polyol (a-1) and the polyol (a-2) are formulated so as to have an average functionality of 1.5 to 4.5 as described later.

The alkylene oxides that may be used include, for example, ethylene oxide, propylene oxide, 1,2-, 1,3-, 1,4- and 2,3-butylene oxides and combinations of two or more thereof. Of these alkylene oxides, propylene oxide and/or ethylene oxide may be preferably used. When used in combination, they may take either of the block addition and the random addition, preferably the block addition.

It is preferable that in the polyol (a-1), for example, 80% by weight or more, or further preferably 100 % by weight, of oxypropylene unit is contained in the oxyalkylene unit, and that in the polyol (a-2), for example, 20% by weight or more of oxyethylene unit is contained in the oxyalkylene unit. In the polyol (a-2), the increase of oxyethylene unit contained in oxyalkylene unit enables the hardness to less increase at low temperature.

In the polyol composition of the present invention, as the polyol (a-1) and/or the polyol (a-2), in addition to the polyoxyalkylene polyol described above, vinyl polymer-containing polyoxyalkylene polyol, polyester polyol, or polyoxyalkylene polyester block copolymer can be used in combination.

Examples of the vinyl polymer-containing polyoxyalkylene polyols that may be used include those in which vinyl monomer, such as acrylonitrile and styrene, is polymerized and stably dispersed in the polyoxyalkylene polyol cited above in the presence of radicals. The content of the vinyl polymer in the polyoxyalkylene polyol is usually from 15 to 45% by weight.

Examples of the polyester polyols that may be used include those obtained by condensation polymerization of one or two or more compounds having two or more hydroxyl groups including, for example, ethylene glycol, diethylene glycol, triethylene glycol, 1,2-propylene glycol, trimethylene glycol, 1,3- or 1,4-butylene glycol, hexamethylene glycol, decamethylene glycol, glycerin, trimethylolpropane, pentaerythritol and sorbitol, and one or two or more compounds having two or more carboxyl groups including, for example, adipic acid, succinic acid, malonic acid, maleic acid, tartaric acid, pimelic acid, sebacic acid, phthalic acid, terephthalic acid, isophthalic acid and trimellitic acid; and those obtained by ring opening polymerization of ε-caprolactone or the like.

Examples of the polyoxyalkylene polyester block copolymer polyols that may be used include those having the structure of polyoxyalkylene polyol blocked by a polyester chain, as disclosed in, for example, Japanese Examined Patent Publication No. 48-10078, or in which the part to be substituted by hydrogen atoms of hydroxyl groups of the polyoxyalkylene polyol or of the derivative having hydroxyl groups is expressed by the general formula (1): 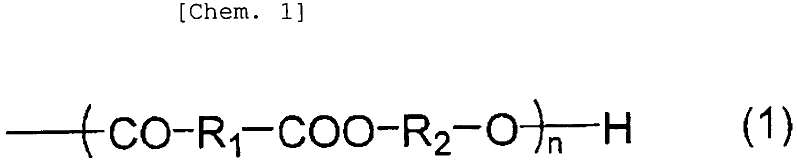 where R1 and R2 are bivalent hydrocarbon and n is a number larger than 1 in average.

In the general formula (1), bivalent hydrocarbon residues represented by R1 include, for example, saturated aliphatic or aromatic polycarboxylic acid residues; bivalent hydrocarbon residues represented by R2 include, for example, residues resulting from cleavage of compounds having cyclic ether groups; and n is preferably the number ranging from 1 to 20.

The polyoxyalkylene polyester block copolymer polyols are obtained by allowing polycarboxylic anhydride and alkylene oxide to react with polyoxyalkylene polyol.

The polyol (a-1) has an average functionality of from 1.5 to 4.5, preferably from 2.5 to 3.5, and a hydroxyl value of from 20 to 70 mgKOH/g, preferably 30 to 60 mgKOH/g, while the polyol (a-2) has an average functionality of from 1.5 to 4.5, preferably from 2.5 to 3.5, and a hydroxyl value of from 100 to 300 mgKOH/g, preferably 125 to 250 mgKOH/g.

With the average functionality of less than 1.5, physical properties of the obtained polyurethane foam, such as dry heat permanent set (compression set), may deteriorate drastically. With the average functionality of more than 4.5, the obtained polyurethane foam have reduced stretchability and increased hardness, and as a result, the physical properties, such as tensile strength, will deteriorate.

Since polyol (a-1) of 20 to 70 mgKOH/g and polyol (a-2) of 100 to 300 mgKOH/g, which have different hydroxyl values from each other, are contained, the obtained polyurethane foam can be easily given a glass transition point in each of the temperature range of -70°C to -20°C and the temperature range of 0°C to 60°C having the advantage described later. Further, when polyol (a-2) has a hydroxyl value of less than 100 mgKOH/g, the polyurethane foam containing the polyol (a-2) may shrink after foamed during the foaming of the polyurethane foam.

The polyol composition of the present invention contains therein the polyol (a-1) in the range of 20 to 80% by weight and the polyol (a-2) in the range of 20 to 80% by weight. With the polyol (a-1) of less than 20% by weight, in other words, with the polyol (a-2) of more than 80% by weight, a polyurethane foam has coarse cells and provides a degraded feel. On the other hand, with the polyol (a-1) of more than 80% by weight, in other words, with the polyol (a-2) of less than 20% by weight, the impact resilience at room temperature increases.

Further, it is preferable that the polyol composition contains therein the polyol (a-1) in the range of 32 to 80% by weight and the polyol (a-2) in the range of 20 to 68% by weight. When the polyol (a-1) and the polyol (a-2) are contained in these ranges, the obtained urethane foam has at least one glass transition point in each of the temperature range of -70°C to -20°C and the temperature range of 0°C to 60°C; and further, a tan δ peak obtained when dynamic viscoelasticity measurement is performed with respect to the glass transition point at a frequency of 10 hertz, is 0.15 or more in the temperature range of -70°C to -20°C, and is 0.3 or more in the temperature range of 0°C to 60°C, enabling the hardness to less increase at low temperature.

It is also preferable that the polyol composition contains therein the polyol (a-1) in the range of 20 to 40% by weight and the polyol (a-2) in the range of 60 to 80% by weight. When the polyol (a-1) and the polyol (a-2) are contained in these ranges, impact resilience at room temperature can be further reduced, and tensile strength and yellowing resistance can be improved. The lower the impact resilience is, the more comfortable feeling the low resilience polyurethane foam can provide, and therefore, such low resilience polyurethane foam is preferable when used in applications where an increased hardness at low temperature is not considered as a serious problem. From this viewpoint, it is more preferable that the polyol composition contains therein the polyol (a-1) in the range of 25 to 35% by weight and the polyol (a-2) in the range of 65 to 75% by weight.

The polyol composition of the present invention preferably contains nitrogen atoms in an amount of 0.1 to 0.17 (mmol/g). When more than 0.17 (mmol/g) of the nitrogen atoms is contained in the polyol composition of the present invention, the yellowing resistance of the low resilience polyurethane foam using the polyol composition of the present invention can be improved. However, the cream time (time required for the start of foaming) becomes shorter, so that the foaming performance in the production process may be degraded, and the hardness and tensile strength may also be decreased.

The polyol composition of the present invention can be obtained as a homogeneous solution, without phase separation of the polyol (a-1) and the polyol (a-2) which are mentioned above. When the polyol composition is used to foam a low resilience polyurethane foam, the low resilience polyurethane foam thus obtained can have a reduced feeling of stickiness or reduced odor, in addition to improved physical properties such as tensile strength and yellowing resistance, so that the polyol composition of the present invention can be suitably used as a raw material of a low resilience polyurethane foam.

The low resilience polyurethane foam of the present invention can be obtained by allowing a polyurethane foam composition containing polyol (a), polyisocyanate (b), catalyst (c), and blowing agent (d) to react, thereby foaming the polyurethane foam composition.

No particular limitation is imposed on the polyol (a) used in the polyurethane foam composition. However, the polyol composition of the present invention described above is preferably used.

Known polyisocyanates in usual use for producing a polyurethane foam may be used as the polyisocyanate (b) used in the present invention. Examples of such polyisocyanates include aromatic polyisocyanates such as 2,4- or 2,6-tolylene diisocyanate (TDI), diphenylmethane diisocyanate (MDI), phenylene diisocyanate (PDI) and naphthalene diisocyanate (NDI); aralkyl polyisocyanates such as 1,3- or 1,4-xylylene diisocyanate (XDI); aliphatic polyisocyanates such as hexamethylene diisocyanate (HDI); cycloaliphatic polyisocyanates such as 3-isocyanatomethyl-3,5,5-trimethylcyclohexyl isocyanate (IPDI), 4-4'-methylene-bis (cyclohexyl isocyanate) (H₁₂ MDI), 1,3- or 1,4-bis(isocyanatomethyl)cyclohexane (H₆ XDI), and modified polyisocyanates thereof including carbodiimides, biurets, allophanates, dimers, trimers, or polymethylene polyphenyl polyisocyanates (crude MDI, polymeric MDI). These may be used alone or in combinations of two or more of them. Of these polyisocyanates, the aromatic polyisocyanates are preferable and the TDI is further preferable.

Further, known catalysts in usual use for producing a polyurethane foam may be used as the catalyst (c) used in the present invention. Examples of such catalysts include amine catalysts including tertiary amines, such as triethylamine, triethylenediamine and N-methylmorpholine; quaternary ammonium salts, such as tetraethylhydroxyl ammonium; amine catalysts including imidazoles, such as imidazole and 2-ethyl-4-methylimidazole; and organic metal catalysts including organic tin compounds such as tin acetate, tin octylate, dibutyltin dilaurate and dibutyltin chloride, organic lead compounds such as lead octylate and lead naphthenate, and organic nickel compounds such as nickel naphthenate.

Of these catalysts, a combination of the amine catalyst and the organic tin catalyst is preferable. Since less amount of the amine catalyst allows the odor in the resulting foamed material to be reduced, minimum use of the amine catalyst is more preferable. The use of the organic tin catalyst alone without using the amine catalyst is even more preferable.

Known blowing agent in usual use for producing a polyurethane foam may be used as the blowing agent (d) used in the present invention. Examples of such blowing agents include water and/or halogen substituted aliphatic hydrocarbon blowing agents such as trichlorofluoromethane, dichlorodifluoromethane, trichloroethane, trichloroethylene, tetrachloroethylene, methylene chloride, trichlorotrifluoroethane, dibromotetrafluoroethane and carbon tetrachloride. These blowing agents may be used in combination of two or more kinds, while in the present invention, water is preferably used alone.

The low resilience polyurethane foam composition may contain foam stabilizer, chain extender, flame retardant and other additives, in addition to the components mentioned above, if needed.

Known foam stabilizers in usual use for producing a polyurethane foam, such as siloxane-oxyalkylene block copolymer, may be used as the foam stabilizer used in the present invention. An example thereof is SRX-294A available from Dow Corning Toray Co., Ltd.

Also, known chain extenders in usual use for producing a polyurethane foam may be used as the chain extender used in the present invention. Examples thereof include diethylene glycol (DEG), dipropylene glycol (DPG), and further dihydric to trihydric aliphatic alcohols used as the initiator mentioned above.

Also, known flame retardants in usual use for producing a polyurethane foam may be used as the flame retardant used in the present invention. Examples thereof include condensed phosphate ester (an example thereof is CR-504L available from Daihachi Chemical Industry Co. , Ltd.) and trischloroisopropyl phosphate (an example thereof is TMCPP available from Daihachi Chemical Industry Co., Ltd.).

Other additives that may be used include, for example, known colorant, plasticizer, antioxidant and ultraviolet absorber in usual use for producing a polyurethane foam.

In the polyurethane foam composition of the present invention, the components are blended in such a proportion that the catalyst (c)is in an amount of from 0.01 to 5 parts by weight, preferably from 0.05 to 2 parts by weight; the blowing agent is in an amount of from 0.5 to 4.5 parts by weight, preferably from 0.8 to 3.5 parts by weight; the foam stabilizer (e) is in an amount of from 0.1 to 4 parts by weight, preferably 0.4 to 2 parts by weight, if blended; the chain extender (f) is in an amount of from 0.1 to 10 parts by weight, preferably 0.1 to 5 parts by weight, if blended; and the flame retardant is in an amount of 20 parts by weight or less, preferably 15 parts by weight or less, if blended, per 100 parts by weight of the polyol (a).

Further, the polyisocyanate (b) is blended in such a proportion that the isocyanate index can reach, for example, 75 to 125, preferably 80 to 100.

To obtain the low resilience polyurethane foam, the polyurethane foam composition may be foamed in the above proportion by a known foaming method such as a slabstock foam process, a molded foam method, and a spraying method.

It is preferable that the low resilience polyurethane foam of the present invention thus obtained has at least one glass transition point in each of the temperature range of -70°C to -20°C, preferably -50°C to -25°C, and the temperature range of 0°C to 60°C, preferably 10°C to 40°C. It is preferable when the glass transition point is expressed as a tan δ peak obtained when dynamic viscoelasticity measurement is performed with respect to the glass transition point at a frequency of 10 hertz, at least one tan δ peak in the temperature range of -70°C to -20°C is 0.15 or more, preferably 0.17 or more, and at least one tan δ peak in the temperature range of 0°C to 60°C is 0.3 or more, preferably 0.48 or more.

When the glass transition point is in each of the temperature range of -70°C to -20°C and the temperature range of 0°C to 60°C, and the tan δ peak of the glass transition point is 0.15 or more in the range of -70°C to -20°C and is 0.3 or more in the range of 0°C to 60°C, the hardness at low temperature can be less increased.

Such less increase of the hardness at low temperature can be exhibited by using the polyol composition of the present invention in which the polyol (a) contains the polyol (a-1) in the range of 32 to 80% by weight, and the polyol (a-2) in the range of 20 to 68% by weight, as described above.

As long as the low resilience polyurethane foam of the present invention has the predetermined tan δ peak in each of the two temperature ranges described above, two tan δ peaks may exist in one temperature range. Further, it is preferable that at least one tan δ peak in the temperature range of -70°C to -20°C is in the range of 0.15 to 0.5, while at least one tan δ peak in the temperature range of 0°C to 60°C is in the range of 0.3 to 1.0.

In the low resilience polyurethane foam of the present invention, the impact resilience measured in accordance with JIS K 6400 (1997) is 10% or less, preferably 7% or less, and usually 2% or more.

The difference of b* value in the L*a*b* color difference (CIE1976) before and after exposure to the air containing 400 ppm of NO₂ gas for 1 hour is 20 or less, preferably 0 to 15.

In the low resilience polyurethane foam, it is preferable that the hardness (25%CLD) measured in accordance with JIS K 6400 (1997) is 10 N/100 cm² or less, preferably 9.3 N/100 cm² or less, and usually 4 N/100 cm² or more.

Further, in the low resilience polyurethane foam, it is preferable that the tensile strength measured in accordance with JIS K 6400 (1997) is 0.4 x 9.8 x 10⁴ Pa or more, preferably 0.5 x 9.8 x 10⁴ Pa or more, and usually 3.0 x 9.8 x 10⁴ Pa or less.

Such low impact resilience, and at the same time, low hardness, high tensile strength and little yellowing can be exhibited by using the polyol composition of the present invention in which the polyol (a) contains the polyol (a-1) in the range of 20 to 80% by weight, and the polyol (a-2) in the range of 20 to 80% by weight, as described above.

Further, it is also preferable that the polyol composition contains therein the polyol (a-1) in the range of 20 to 40% by weight and the polyol (a-2) in the range of 60 to 80% by weight. When the polyol (a-1) and the polyol (a-2) are contained in these ranges, impact resilience at room temperature can be further reduced, and tensile strength and yellowing resistance can be improved. The lower the impact resilience is, the more comfortable feeling the low resilience polyurethane foam can provide, and therefore, such low resilience polyurethane foam is preferable when used in applications where an increased hardness at low temperature is not considered as a serious problem. From this viewpoint, it is more preferable that the polyol composition contains therein the polyol (a-1) in the range of 25 to 35% by weight and the polyol (a-2) in the range of 65 to 75% by weight.

In the low resilience polyurethane foam of the present invention, when the polyol composition of the present invention is used as polyol (a), polyol (a-2) contains amine as an initiator. Therefore, when the isocyanate index is set such that the low resilience polyurethane foam of the present invention has the same hardness (25%CLD) as a low resilience polyurethane foam using polyol composition which does not contain polyol (a-2) containing amine, the low resilience polyurethane foam of the present invention has excellent low resilience at room temperature, and shows less increase in hardness at low temperature, excellent in mechanical strength, such as tensile strength, and yellowing resistance, and further has a reduced feeling of stickiness and reduced odor.

### EXAMPLES

While in the following, the present invention is described in detail with reference to Examples and Comparative Examples, the present invention is not limited to them.

### 1) The following raw materials were used.

### Polyol (a)

(1) Glycerine-polyoxypropylene polyoxyethylene polyol, average functionality: 3, hydroxyl value: 155mgKOH/g, oxypropylene content for oxyalkylene moiety: 78% by weight, oxyethylene content: 22% by weight
(2) Triethanolamine-polyoxypropylene polyoxyethylene polyol, average functionality: 3, hydroxyl value: 155 mgKOH/g, oxypropylene content for oxyalkylene moiety: 78% by weight, oxyethylene content: 22% by weight
(3) Glycerine-polyoxypropylene polyol, average functionality: 3, hydroxyl value: 34 mgKOH/g, oxypropylene content for oxyalkylene moiety: 100% by weight
(4) Triethanolamine-polyoxypropylene polyol, average functionality: 3, hydroxyl value: 34 mgKOH/g, oxypropylene content for oxyalkylene moiety: 100% by weight

### Polyisocyanate (b)

TDI-80 (toluene diisocyanate (a mixture of 80% by weight of 2,4-isomer and 20% by weight of 2,6-isomer) (available from MITSUI CHEMICALS POLYURETHANES, INC.))

### Catalyst (c)

(1) Amine catalyst/dipropylene glycol (67% solution) (DABCO 33LV, available from Air Products and Chemicals, Inc.)
(2) Tin octylate (DABCO T-9, available from Air Products and Chemicals, Inc.)

### Blowing agent (d)

Water (ion exchange water)

### Foam stabilizer (e)

Silicon foam stabilizer (SRX-294A, available from Dow Corning Toray Co., Ltd.)

### Chain extender (f)

Dipropylene glycol

### 2) Production of Urethane Foams of Examples and Comparative Examples

The components of Examples and Comparative Examples shown in TABLE 1 below, except the catalyst (c)(2) and the polyisocyanate (b), were stirred with a hand mixer. The catalyst (c) (2) was then added thereto and stirred for 5 seconds. Immediately thereafter, the polyisocyanate (b) was added to and mixed in the mixture in accordance with the isocyanate indexes shown in TABLE 1. The resultant mixture was poured into foam boxes to be foamed and cured. The urethane foam thus obtained was allowed to stand at room temperature for one day, and thereafter the physical properties thereof were measured.

**[Table 1]**

| Components of Urethane Foam | Examples | | | | | | | | | | Comparative Examples | | | |
|---|---|---|---|---|---|---|---|---|---|---|---|---|---|---|
| | 1 | 2 | 3 | 4 | 5 | 6 | 7 | 8 | 9 | 10 | 1 | 2 | 3 | 4 |
| Polyol (a) (1) | 46 | 46 | 46 | 43 | 40 | 26 | 51 | 56 | 61 | 66 | 60 | 60 | 60 | 60 |
| Polyol (a) (2) | 14 | 14 | 14 | 17 | 20 | 14 | 14 | 14 | 14 | 14 | - | - | - | - |
| Polyol (a) (3) | 40 | 40 | 40 | 40 | 40 | 60 | 35 | 30 | 25 | 20 | 40 | 40 | 40 | - |
| Polyol (a) (4) | - | - | - | - | - | - | - | - | - | - | - | - | - | 40 |
| Catalyst (c) (1) | - | - | - | - | - | - | - | - | - | - | 0.3 | 0.3 | 0.3 | - |
| Catalyst (c) (2) | 0.1 | 0.1 | 0.1 | 0.1 | 0.1 | 0.1 | 0.1 | 0.1 | 0.1 | 0.1 | 0.1 | 0.1 | 0.1 | 0.1 |
| Blowing Agent (d) Water | 2 | 2 | 2 | 2 | 2 | 2 | 2 | 2 | 2 | 2 | 2 | 2 | 2 | 2 |
| Foam Stabilizer (e) | 1 | 1 | 1 | 1 | 1 | 1 | 1 | 1 | 1 | 1 | 1 | 1 | 1 | 1 |
| Chain Extender (f) | 4 | 4 | 4 | 4 | 4 | 4 | 4 | 4 | 4 | 4 | 4 | 4 | 4 | 4 |
| Polyisocyanate (b) | 34.9 | 37.0 | 39.0 | 37.0 | 37.0 | 33.6 | 37.8 | 38.7 | 39.5 | 40.4 | 34.9 | 37.0 | 39.0 | 37.0 |
| Isocyanate Index | 85 | 90 | 95 | 90 | 90 | 90 | 90 | 90 | 90 | 90 | 85 | 90 | 95 | 90 |
| Foam State | Normal | Normal | Normal | Normal | Normal | Normal | Normal | Normal | Normal | Normal | Normal | Normal | Normal | Shrunk |
| Cream Time (sec.) | 24 | 24 | 24 | 21 | 18 | 26 | 24 | 23 | 23 | 22 | 22 | 22 | 22 | 28 |
| Rise Time (sec.) | 162 | 157 | 154 | 150 | 140 | 172 | 155 | 151 | 150 | 148 | 140 | 133 | 129 | 180 |
| Density (kg/m³) | 47.4 | 45.0 | 43.6 | 47.2 | 51.0 | 46.5 | 44.6 | 44.5 | 44.1 | 43.8 | 47.3 | 44.7 | 44.6 | - |
| impact Resilience (%) | 6 | 6 | 6 | 5 | 5 | 10 | 5 | 5 | 4 | 4 | 7 | 6 | 6 | - |
| Hardness (25%CLD) (N/100cm²) | 7.6 | 8.4 | 9.2 | 6.8 | 5.6 | 8.5 | 8.2 | 8.1 | 8.3 | 8.5 | 8.5 | 9.4 | 10.2 | - |
| Tensile Strength (9.8 x 10⁴Pa) | 0.50 | 0.69 | 0.92 | 0.47 | 0.42 | 0.6 | 0.73 | 0.78 | 0.76 | 0.71 | 0.54 | 0.71 | 1.03 | - |
| Discoloration due to Exposure to NO₂ Gas | 12.0 | 13.4 | 14.5 | 13.1 | 12.5 | 16 | 11.8 | 10.8 | 12.2 | 14.8 | 21.82 | 21.93 | 22.24 | - |

The proportions of the components of all the urethane foam compositions in TABLE 1 are expressed in parts by weight except the isocyanate index.

### 3) Method for Measurement of Physical Properties

The physical properties of the polyurethane foams obtained in Examples and Comparative Examples were measured by the following methods. The results are shown in TABLE 1.
(a) Density, impact resilience, hardness (25%CLD), and tensile strength were measured in accordance with JIS K 6400 (1997).
(b) Discoloration due to exposure to NO₂ gas was determined by the following method: A rectangular parallelepiped specimen having a length of 30 mm and a section of 100 mm x 10 mm was cut out from each of the polyurethane foams thus obtained. Under the conditions of room temperature 23±2°C and relative humidity 50±5%, the specimen was exposed to air containing 400 ppm of NO₂ gas for 1 hour, and the difference of b* value in the L*a*b* color difference (CIE1976) before and after the exposure was measured. The color difference value was measured using the automatic color difference meter, COLOR ACE MODEL TC-1 available from Tokyo Denshoku Co., Ltd. Higher numerical values for the b* value indicate higher degrees of yellow.

### 4) Measurement Results

It can be clearly seen from TABLE 1 that Examples, which contain the polyol (a)(2) containing amine as a raw material of polyurethane foam, can provide good results in the discoloration of the foamed polyurethane foams due to exposure to NO₂ gas as compared with Comparative Examples not containing the polyol (a) (2) containing amine.

It can also be seen that Examples 7 to 9 with 25 to 35 parts by weight of the polyol (a) (3) maintain low impact resilience and have good tensile strength and yellowing resistance, as compared with the other Examples.

## Claims

1. A polyol composition comprising:
polyol (a-1) in an amount of from 20 to 80% by weight, having an average functionality of from 1.5 to 4.5 and a hydroxyl value of from 20 to 70 mg KOH/g; and
polyol (a-2) in an amount of from 20 to 80% by weight, having an average functionality of from 1.5 to 4.5 and a hydroxyl value of from 100 to 300 mg KOH/g, and containing at least amine as an initiator.

2. The polyol composition according to claim 1, wherein the polyol (a-1) is from 20 to 40 % by weight, and the polyol (a-2) is from 60 to 80 % by weight.

3. The polyol composition according to claim 1, wherein the polyol (a-2) contains amine and alcohol, as an initiator.

4. The polyol composition according to claim 3, wherein the amine and the alcohol are aliphatic compounds.

5. A low resilience polyurethane foam obtainable by allowing a polyurethane foam composition containing polyol (a), polyisocyanate (b), catalyst (c), and blowing agent (d) to react,
the polyol (a) comprising:
polyol (a-1) in an amount of from 20 to 80% by weight, having an average functionality of from 1.5 to 4.5 and a hydroxyl value of from 20 to 70 mg KOH/g; and
polyol (a-2) in an amount of from 20 to 80% by weight, having an average functionality of from 1.5 to 4.5 and a hydroxyl value of from 100 to 300 mg KOH/g, and containing at least amine as an initiator,
the polyurethane foam having an impact resilience measured in accordance with JIS K 6400 (1997) of 10% or less, and
a difference of b* value in the L*a*b* color difference (CIE1976) before and after exposure to air containing 400 ppm of NO₂ gas for 1 hour of 20 or less.

6. The low resilience polyurethane foam according to claim 5, having a hardness (25%CLD) measured in accordance with JIS K 6400 (1997) of 10 N/100 cm² or less.

7. The low resilience polyurethane foam according to claim 5, having a tensile strength measured in accordance with JIS K 6400 (1997) of 0.4 x 9.8 x 10⁴ Pa or more.

## Patentansprüche

1. Polyolzusammensetzung, umfassend:
Polyol (a-1) in einer Menge von 20 bis 80 Gew.-%, das eine durchschnittliche Funktionalität von 1,5 bis 4,5 und eine Hydroxylzahl von 20 bis 70 mg KOH/g aufweist; und
Polyol (a-2) in einer Menge von 20 bis 80 Gew.-%, das eine durchschnittliche Funktionalität von 1,5 bis 4,5 und eine Hydroxylzahl von 100 bis 300 mg KOH/g aufweist und mindestens Amin als Initiator enthält.

2. Polyolzusammensetzung gemäß Anspruch 1, wobei das Polyol (a-1) 20 bis 40 Gew.-% ausmacht und das Polyol (a-2) 60 bis 80 Gew.-% ausmacht.

3. Polyolzusammensetzung gemäß Anspruch 1, wobei das Polyol (a-2) Amin und Alkohol als Initiator enthält.

4. Polyolzusammensetzung gemäß Anspruch 3, wobei das Amin und der Alkohol aliphatische Verbindungen sind.

5. Polyurethanschaum mit geringer Rückfederung, erhältlich durch Reaktion einer Polyurethanschaumzusammensetzung, die Polyol (a), Polyisocyanat (b), Katalysator (c) und Treibmittel (d) enthält, wobei
das Polyol (a) umfasst:
Polyol (a-1) in einer Menge von 20 bis 80 Gew.-%, das eine durchschnittliche Funktionalität von 1,5 bis 4,5 und eine Hydroxylzahl von 20 bis 70 mg KOH/g aufweist; und
Polyol (a-2) in einer Menge von 20 bis 80 Ges.-%, das eine durchschnittliche Funktionalität von 1,5 bis 4,5 und eine Hydroxylzahl von 100 bis 300 mg KOH/g aufweist und mindestens Amin als Initiator enthält,
der Polyurethanschaum eine Stoßelastizität, gemessen gemäß JIS K 6400 (1997), von 10% oder weniger aufweist, und
eine Differenz des b*-Wertes in der L*a*b*-Farbdifferenz (CIE1976) vor und nach Exposition gegenüber Luft, enthaltend 400 ppm NO₂-Gas, für 1 Stunde 20 oder weniger ist.

6. Polyurethanschaum mit geringer Rückfederung gemäß Anspruch 5, der eine Härte (25% CLD), gemessen gemäß JIS K 6400 (1997); von 10 N/100 cm² oder weniger aufweist.

7. Polyurethanschaum mit geringer Rückfederung gemäß Anspruch 5, der eine Zugfestigkeit, gemessen gemäß JIS K 6400 (1997), von 0,4 × 9,8 × 10⁴ Pa oder mehr aufweist.

## Revendications

1. Composition de polyols comprenant:
un polyol (a-1) en une quantité de 20 à 80 % en poids, ayant une fonctionnalité moyenne de 1,5 à 4,5 et un indice d'hydroxyle de 20 à 70 mg de KOH/g; et
un polyol (a-2) en une quantité de 20 à 80 % en poids, ayant une fonctionnalité moyenne de 1,5 à 4,5 et un indice d'hydroxyle de 100 à 300 mg de KOH/g, et contenant au moins une amine en tant qu'initiateur.

2. Composition de polyols selon la revendication 1, dans laquelle le polyol (a-1) est de 20 à 40 % en poids, et le polyol (a-2) est de 60 à 80 % en poids.

3. Composition de polyols selon la revendication 1, dans laquelle le polyol (a-2) contient une amine et un alcool, en tant qu'initiateur.

4. Composition de polyols selon la revendication 3, dans laquelle l'amine et l'alcool sont des composés aliphatiques.

5. Mousse de polyuréthane à faible résilience pouvant être obtenue en permettant la réaction d'une composition de mousse de polyuréthane contenant un polyol (a), un polyisocyanate (b), un catalyseur (c) et un agent gonflant (d),
le polyol (a) comprenant :
un polyol (a-1) en une quantité de 20 à 80 % en poids, ayant une fonctionnalité moyenne de 1,5 à 4,5 et un indice d'hydroxyle de 20 à 70 mg de KOH/g ; et
un polyol (a-2) en une quantité de 20 à 80 % en poids, ayant une fonctionnalité moyenne de 1,5 à 4,5 et un indice d'hydroxyle de 100 à 300 mg de KOH/g, et contenant au moins une amine en tant qu'initiateur,
la mousse de polyuréthane ayant une résilience aux chocs mesurée conformément à la norme JIS K 6400 (1997) de 10 % ou moins, et
une différence de la valeur b* dans la différence de couleur L*a*b* (CIE1976) avant et après une exposition à l'air contenant 400 ppm de gaz NO₂ pendant 1 heure de 20 ou moins.

6. Mousse de polyuréthane à faible résilience selon la revendication 5, ayant une dureté (25 % CLD) mesurée conformément à JIS K 6400 (1997) de 10 N/100 cm² ou moins.

7. Mousse de polyuréthane à faible résilience selon la revendication 5, ayant une résistance à la traction mesurée conformément à JIS K 6400 (1997) de 0,4 x 9,8 x 10⁴ Pa ou plus.
